(19) **Europäisches Patentamt**
**European Patent Office**
**Office européen des brevets**

(11) **EP 2 060 599 A1**

(12) **EUROPEAN PATENT APPLICATION**

(43) Date of publication:
**20.05.2009 Bulletin 2009/21**

(51) Int Cl.:
**C08K 5/00** (2006.01)

(21) Application number: **08016880.0**

(22) Date of filing: **25.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.11.2007 KR 20070117268**

(71) Applicant: **SK Energy Co., Ltd.**
**Seoul 110-110 (KR)**

(72) Inventors:
• **Lee, Young-Keun**
**Seocho-gu, Seoul, 137-949 (KR)**

• **Park, Sang-Hyun**
**Yuseong-gu, Daejeon, 305-751 (KR)**
• **Rhee, Jang-Weon**
**Seo-gu, Daejeon, 302-771 (KR)**
• **Lee, Je-An**
**Seo-gu, Daejeon, 302-775 (KR)**

(74) Representative: **Adam, Holger**
**Kraus & Weisert**
**Patent- und Rechtsanwälte**
**Thomas-Wimmer-Ring 15**
**80539 München (DE)**

(54) **Microporous polyethylene film with improved strength, permeability and surface energy**

(57) The present invention relates a microporous polyethylene film with improved mechanical strength, porosity, pore size and, particularly, improved surface energy, thereby having improved electrolyte wettability and being adequate for use as separators in high-capacity and long lifetime lithium secondary batteries. The microporous polyethylene film of the present invention is characterized by having a surface energy of at least 50 dynes/cm$^2$, an air permeability (Darcy's permeability constant) of at least $2.0 \times 10^{-5}$, a puncture strength of at least 0.17 N/m, a product of the air permeability and the puncture strength of at least $0.34 \times 10^{-5}$ Darcy N/m, a weighted average pore size of at least 30 nm, and a film shrinkage in the transverse and machine directions of not more than 5% at 105 °C for 10 minutes and not more than 15% at 120 °C for 60 minutes, respectively. The microporous polyethylene film is prepared by compounding raw materials in an extruder such that a thermodynamic single phase is formed above the temperature of liquid-liquid phase separation, inducing sufficient phase separation in a phase separation zone formed inside the extruder by controlling the temperature below the temperature of liquid-liquid phase separation, forming through a die, and carrying out plasma treatment in order to enhance surface energy.

EP 2 060 599 A1

**Description**

<u>**CROSS-REFERENCE TO RELATED APPLICATION**</u>

This application claims priority to Korean Patent Application No. 10-2007-0117268, filed on November 16, 2007, in the Korean Intellectual Property Office, the entire contents of which are incorporated herein by reference.

<u>**BACKGROUND**</u>

**Field of the Invention**

The present invention relates to a microporous polyethylene film and a process for preparing the same. More particularly, the present invention relates to a microporous polyethylene film with improved mechanical strength, porosity, pore size and, particularly, improved surface energy, thereby having improved electrolyte wettability and being adequate for use as separators in high-capacity, durable lithium secondary batteries.

**Background of the Related Art**

Having chemical stability and superior physical properties, a microporous polyethylene film is widely used as battery separators, separation filters, ultrafiltration membranes, and the like.

The production of the microporous film from polyethylene may be conducted according to the following three processes. In a first process, polyethylene is processed into a thin fiber to produce a nonwoven fabric-shaped microporous film. A second process is a dry process, in which a thick polyethylene film is prepared and then stretched at low temperature to create microcracks between lamellas corresponding to crystalline portions of the polyethylene to form micropores in the polyethylene. A third process is a wet process, in which polyethylene is compounded at high temperature with a diluent to form a single phase, phase separation of polyethylene and diluent is initiated in a cooling step, and the diluent is extracted to form pores in the polyethylene. In comparison with the first and second processes, the third wet process produces a thin film having uniform thickness and excellent physical properties, and thus, the film produced according to the wet process is widely used for a separator of a secondary battery, such as a lithium ion battery.

The methods for preparing a microporous film according to the wet process are classified into a solid-liquid phase separation method and a liquid-liquid phase separation method, depending on how a polymer (resin) constituting the film to be prepared and a diluent blended therewith experience phase separation and form pores. The two methods are identical until the step where the polymer and the diluent are mixed at high temperature to form a single phase. However, in case of the solid-liquid phase separation method, no phase separation occurs until the polymer is crystallized, as it is cooled, then becomes a solid. In other words, since phase separation occurs as polymer chains are crystallized and the diluent is pushed out to the outside of the crystals, it is disadvantageous in that the size of the phase separation is very small compared to the size of polymer crystals, and it is not possible to control the structure, such as the shape, size, etc., of the separated phase variously. In this case, the application to the secondary battery separators having a high permeability required by high-capacity secondary batteries would be limited. It has been also known that there have been no ways of increasing mechanical strength other than the basic way of increasing the molecular weight of polymer resins such as mixing ultra high molecular weight polyethylene which is costly and difficult to be mixed and greatly increases the processing load, or the like. The typical composition of solid-liquid phase separation well known in the art is mixing polyolefin resins with paraffin oil or mineral oil, which is introduced in U.S. Patent No. 4,539,256, U.S. Patent No. 4,726,989, U.S. Patent No. 5,051,183, U.S. Patent No. 5,830,554, U.S. Patent No. 6,245,272, U.S. Patent No. 6,566,012, etc.

In case of the liquid-liquid phase separation method, phase separation of a liquid-state polymer material and also a liquid-state diluent occurs firstly by thermodynamic instability at a temperature higher than that of crystallization of the polymers before the polymers are crystallized and become solidified. Phase transition of the phase according to the conditions for phase separation, conformation of phase separation, and the like have been well established in the academic field. Microporous films manufactured according to liquid-liquid phase separation are advantageous in that not only the size of pores becomes basically greater up to about 2 to 1,000 times than that of microporous films manufactured according to solid-liquid phase separation, and the temperature of liquid-liquid phase separation and the size of the phase may be controlled according to the type of the polymer and the combination with the diluent, but also the size of the phase may be controlled variously according to the difference between the temperature of thermodynamic liquid-liquid phase separation and the temperature of actually progressing phase separation, and the residence time in each step.

In U.S. Patent No. 4,247,498, various combinations of polymers and diluents that may be separated by liquid-liquid phase separation are introduced, and the possibility of manufacturing products with a broad range of thicknesses by extracting the diluent from the liquid-liquid phase separated composition is described. U.S. Patent No. 4,867,887 discloses an invention for the manufacture of oriented microporous films through stretching, extracting, drying and heat-setting of the compositions prepared by liquid-liquid phase separation. The methods disclosed in these patents are limited in obtaining superior mechanical strength and permeability, which are essential physical properties for the secondary battery separators, at the same time, due to difficulties in providing sufficient time for phase separation, which results in decreased phase separation effect and difficulties in controlling pores during extrusion and cooling, since liquid-liquid phase separation occurs in relatively short time (a few seconds) during which the resin mixture is extruded in a thermodynamic single phase while maintaining the temperature higher than that of liquid-liquid phase separation until the mixing and extrusion, and this molten resin material is cooled, for example, by a casting roll after it is extruded to the atmosphere. In U.S. Patent No. 4,867,887, there is no mention of stretching temperature in claims. However, in the examples in which high density polyethylene is used, the stretching temperature is described to be lower than the melting temperature of the high density polyethylene by at least 20°C, and up to by 60°C.

In such forced low-temperature stretching, tearing of the polymer may occur and, as a result, good permeability may be attained. It is deemed that the rapid increase in permeability as stretch ratio increases seen in the examples supports this conjecture. However, such low-temperature stretching is deemed to be insufficient to obtain pore structures during the process of extrusion and cooling, and it is disadvantageous in that not only it is highly probable that pin holes or abnormally large sized holes, which are the most important factor in deteriorating battery separator quality, may be formed, but also the risk of sheet breakage is also increased.

The above-described techniques are those aiming at physical and/or morphological improvement to get higher porosity and larger pore size through controlling phase separation mechanism, in order to attain superior physical properties and improved ion permeability of a polyolefin microporous film prepared by the wet process for use as battery separator. However, because conventionally used separators are prepared from hydrophobic materials such as polyethylene, polypropylene, etc., they are usually not compatible with the electrolytes, which mediate ion transfer inside the battery. Thus, the electrolyte needs to be injected in large quantity, and the electrolyte may leak during repeated charge and discharge, thereby reducing cycle life of the battery. In order to overcome these limitations, improvement of the separator's compatibility with the electrolyte through chemical modification is required, in addition to the physical and/or morphological improvement of the polyolefin microporous film.

U.S. Patent No. 5,578,400 states that a separator for a lithium secondary battery, which is prepared by irradiating the surface of a polyolefin microporous film with electron beam to create free radicals, and immersing it in a polar monomer solution to graft the hydrophilic groups, has improved wettability in electrolyte. Similarly, Korean Patent No. 2004-0075199 states that a lithium secondary battery separator, which is prepared by irradiating the surface of a polyolefin microporous film with electron beam, gamma ray, plasma, etc. to create free radicals, and immersing it in a polar monomer solution to graft the hydrophilic groups, has increased surface energy and improves capacity and cycle life of a lithium secondary battery. Further, Jang-Myun Ko et al. (Electrochimica Acta 50, 2004, 367-370) have confirmed that a polyethylene separator surface-modified by grafting with glycidyl methacrylate has improved wettability in electrolyte, and that it improves cycle life of a lithium secondary battery. However, the separator produced by those techniques above is disadvantageous, in that the strength of the separator will decrease greatly at the time of radicals being created. Also, a long grafting time is required and increased deviation in physical properties will occur due to non-uniform grafting.

In U.S. Patent No. 6,322,923, a separator for a lithium polymer battery with improved adhesion to gel electrolyte is presented, which is prepared by coating a poly(vinylidene fluoride:hexafluoropropylene) copolymer solution on the surface of a polyolefin separator and then coating a gel-forming layer comprising a plasticizer thereon. However, the resultant multi-layered separator is disadvantageous in that ion permeability may decrease because of reduced porosity and increased tortuosity.

Japanese Patent No. 1995-245122 presents a lithium polymer battery with improved ionic conductivity, charge/discharge characteristics and cycle life, in which a polyolefin separator with a surface energy of at least 35 dynes/cm$^2$, which is prepared by treating a conventional polyolefin separator having a surface energy of about 25 dynes/cm$^2$ with plasma in vacuum, is used. U.S. Patent No. 6,287,730 discloses a separator with a surface energy increased up to 48 dynes/cm$^2$, which is prepared by coating a conventional polyolefin separator with a surfactant, and then coating with an ethylene vinyl alcohol (EVOH) copolymer.

Although the aforesaid techniques aim at further improvement of a separator through chemical modification, including plasma treatment, grafting, and the like, they are associated with the disadvantages such as decreased ion permeability, mechanical strength, or the like.

The above information disclosed in this Background section is only for enhancement of understanding of the background of the invention and therefore it may contain information that does not form the prior art that is already known in this country to a person of ordinary skill in the art.

## SUMMARY OF THE INVENTION

### Technical Problem:

The inventors of the present invention have carried out extensive researches in order to solve the problems of the conventional technique as described above, and found that a microporous film with desired degree of phase separation and pore size, and therefore, improved permeability can be obtained by mixing polyethylene and a diluent to form a single phase and carrying out liquid-liquid phase separation sufficiently in an extruder, thereby variably controlling temperature and residence time of the phase separation status. Also, they have noticed that wettability in electrolyte can be further improved by increasing surface energy through plasma treatment, and, as a result, a separator more effective in improving battery capacity and cycle life can be provided. In addition, when the liquid-liquid phase separation occurs sufficiently, the content of the diluent remaining in the phase-separated polyethylene phase is further reduced. Therefore, in the following stretching process, stretching at a high temperature close to the melting temperature of polyethylene becomes possible. This improves stretching stability, and the degree of orientation of the concentrated, phase-separated polyethylene is further improved and as a result, a better mechanical strength is attained with the same molecular weight.

Accordingly, an object of the present invention is to provide a microporous polyethylene film with improved mechanical strength, permeability and electrolyte wettability, which can be used as a separator for a high-capacity secondary battery.

To attain the object described above, the present invention provides a microporous polyethylene film prepared by:

(a) melting, compounding and extruding a mixture comprising 20-55 wt% polyethylene (Component I) and 80-45 wt% diluent (Component II), which is liquid-liquid phase separable from Component I at 160-280 °C, above the temperature of liquid-liquid phase separation in an extruder to form a thermodynamic single phase;

(b) passing the resultant molten material through a zone at which the temperature is maintained in the temperature range of liquid-liquid phase separation to carry out liquid-liquid phase separation, and extruding through a die;

(c) forming the liquid-liquid phase-separated and extruded molten material into a sheet;

(d) stretching the sheet by sequential or simultaneous stretching using a roll or a tenter at a stretch ratio of at least 4 times in transverse and machine directions respectively, and at a total stretch ratio of 25-50 times;

(e) extracting Component II from the stretched film, and drying;

(f) heat-setting the dried film to remove residual stress from the dried film, such that shrinkage of the film in the transverse and machine directions is not more than 5% at 105 °C for 10 minutes and not more than 15% at 120 °C for 60 minutes respectively; and

(g) treating both surfaces of the heat-set film at least once with plasma discharge under atmospheric pressure simultaneously or sequentially, in order to increase surface energy.

## BRIEF DESCRIPTION OF THE DRAWINGS

The above and other objects, features and other advantages of the present invention will be more clearly understood from the following detailed description taken in conjunction with the accompanying drawings, in which:

FIG. 1 shows a surface image of the separator film prepared in Example 1, before plasma treatment;

FIG. 2 shows a surface image of the separator film prepared in Example 1, after plasma treatment; and

FIGS. 3 and 4 show XPS result for the microporous polyethylene film prepared in Example 1, before and after plasma treatment.

## DETAILED DESCRIPTION OF THE PREFERRED EMBODIMENTS

Hereinafter, reference will be made in detail to various embodiments of the present invention and examples of which are illustrated in the accompanying drawings and described below. While the invention will be described in conjunction with exemplary embodiments, it will be understood that the present description is not intended to limit the invention to those exemplary embodiments. On the contrary, the invention is intended to cover not only the exemplary embodiments, but also other various alternatives, modifications, equivalents and other embodiments, which may be included within the spirit and scope of the invention as defined in the appended claims.

### Technical Solution:

As described, the present invention provides a microporous polyethylene film with a controlled pore size, which is attained by carrying out phase separation sufficiently in an extruder, improved stretching processability, which is attained by reducing diluent in the phase-separated polyethylene phase, high permeability and superior mechanical strength without difficulties in processing due to molecular weight increase, which is attained by maximizing orientation during stretching, and improved wettability in electrolyte, which is attained by carrying out plasma treatment to enhance surface energy.

The microporous polyethylene film of the present invention is characterized by having a surface energy of at least 50 dynes/cm$^2$, an air permeability (Darcy's permeability constant) of at least $2.0 \times 10^{-5}$, a puncture strength of at least 0.17 N/$\mu$m, a product of the air permeability and the puncture strength of at least $0.34 \times 10^{-5}$ Darcy·N/$\mu$m, a weight average pore size of at least 30 nm, and a film shrinkage in the transverse and machine directions of not more than 5% at 105°C for 10 minutes and not more than 15% at 120 °C for 60 minutes respectively.

More specifically, the microporous polyethylene film of the present invention is characterized by having a surface energy from 50 dynes/cm$^2$ to 250 dynes/cm$^2$, an air permeability from $2.0 \times 10^{-5}$ to $2 \times 10^{-4}$ Darcy, a puncture strength from 0.17 to 1.2 N/$\mu$m, a product of the air permeability and the puncture strength from $0.34 \times 10^{-5}$ to $2.4 \times 10^{-5}$ Darcy·N/$\mu$m, a weighted average pore size from 30 to 500 nm, and a film shrinkage in the transverse and machine directions of not more than from 0.01 to 5% at 105 °C for 10 minutes and of not more than from 0.5 to 15% at 120 °C for 60 minutes respectively.

The preparation of the microporous polyethylene film in accordance with the present invention comprises the steps of: preparing a separator with high porosity, large pore size and superior mechanical strength by optimizing liquid-liquid phase separation condition and molecular weight and concentration of polyethylene in a wet process, and carrying out plasma treatment of the separator under atmospheric pressure in order to enhance surface energy of the separator.

First, the step of preparing a separator is described as below.

A low molecular weight organic substance partially compatible with polyethylene (hereinafter, diluent) can form a thermodynamic single phase with polyethylene at a temperature higher than the melting point of polyethylene. When a thermodynamic single-phase solution of polyethylene and a diluent is cooled slowly, phase separation of polyethylene and the diluent occurs before polyethylene is crystallized into solid. As the phase separation occurs between the polyethylene and the diluent which are both in liquid state, this phase separation is called liquid-liquid phase separation. The respective phases separated by this phase separation are a polyethylene rich phase mostly consisting of polyethylene and a diluent rich phase consisting of a small amount of polyethylene dissolved in the diluent. The two thermodynamically separated phases undergoes coarsening, or aggregation of the same phase, with time, when both phases are subject to a condition (or temperature) under which they have mobility. As a result, the size of the separated phases becomes larger. The extent to which the size of the separated phases increased by the coarsening action depends on the residence time in the liquid-liquid phase separation state and the temperature at which the liquid-liquid phase separation state is maintained. The size of the phases becomes larger as the residence time increases (proportional to the 1/4-th power of residence time) and as the difference of the temperature of liquid-liquid phase separation and the temperature at which the liquid-liquid phase separation occurs actually is larger. The increase of the size of the phases stops when the polyethylene rich phase is crystallized as the temperature of the molten solution is lowered below the crystallization temperature of the polyethylene rich phase. Accordingly, a microporous polyethylene film can be prepared by carrying out liquid-liquid phase separation of a molten solution, completely cooling the solution to obtain a solidified polyethylene rich phase, and extracting out the diluent rich phase using an organic solvent.

Therefore, the basic pore structure of a microporous film is determined by the phase separation process. That is to say, the size and structure of the diluent rich phase prepared after phase separation determine the final pore size and structure of the microporous film. Accordingly, control of the pore structure is possible by selecting a composition with different thermodynamic phase separation temperature or rate and time during processing, actual temperature inducing phase separation, etc. of phase separation.

Also, the basic physical properties of a microporous film are determined by the polyethylene concentration in the polyethylene rich phase during the phase separation. If the polyethylene concentration of the polyethylene rich phase is increased sufficiently as the phase separation completed sufficiently, the mobility of polyethylene chains decreases and the effect of forced orientation is increased during stretching after cooling. As a result, mechanical strength is improved and thus, given the same resin with the same molecular weight, a composition obtained by sufficient phase separation of the resin and a diluent has much superior mechanical strength than one obtained by insufficient phase separation.

Materials commonly used to prepare a polyolefin microporous film include polyethylene (low density polyethylene, linear low density polyethylene, medium density polyethylene, high density polyethylene, etc.), polypropylene, and the like. However, polyethylene excluding the high density polyethylene and polypropylene are disadvantageous in that they reduce structural regularity of polymer, thereby reducing lamellar perfection in the crystal portion of the resin and resulting in decreased thickness. Further, in case a comonomer is used in the polymerization, a lot of low molecular weight molecules are produced because the comonomer tends to have lower reactivity than ethylene. Therefore, it is preferable to use the high density polyethylene and a comonomer with a content not greater than 2 wt%. $\alpha$-Olefins such

as propylene, butene-1, hexene-1, 4-methylpentene-1, octene-1, etc. may be used as comonomers. More preferably, propylene, butene-1, hexene-1 or 4-methylpentene-1, which has relatively higher reactivity, is used.

The polyethylene has a weight average molecular weight from $2x10^5$ to $4.5x10^5$ and preferably from $3x10^5$ to $4x10^5$. When the weight average molecular weight is less than $2x10^5$, a microporous film with superior physical properties cannot be obtained. Also, when the weight average molecular weight is larger than $4.5x10^5$, load to the extruder increases during extrusion because of increased viscosity, compounding with the diluent becomes difficult because of large viscosity difference between the polyethylene and the diluent, and the surface of the extruded sheet becomes rough. These problems may be solved by increasing extrusion temperature or adjusting the screw configuration of a twin screw compounder to increase shear rate. However, in that case, physical properties become poor due to deterioration of the resin. Particularly, the aforesaid problems may be severe when ultrahigh molecular weight polyethylene is used.

The diluent used in the present invention may be any organic liquid compound which is liquid-liquid phase separable at 160-280°C with 20-55 wt% polyethylene to form a 100% composition. Examples include a phthalic acid ester such as dibutyl phthalate, dihexyl phthalate, dioctyl phthalate, and the like; an aromatic ether such as diphenyl ether, benzyl ether, and the like; a $C_{10}$-$C_{20}$ fatty acid such as palmitic acid, stearic acid, oleic acid, linoleic acid, linolenic acid, and the like; a $C_{10}$-$C_{20}$ fatty alcohol such as palmityl alcohol, stearyl alcohol, oleyl alcohol, and the like; and a fatty acid ester derived from esterification of a saturated or unsaturated fatty acid having C4-C26 in the fatty acid group or one or more fatty acid which the double bond(s) of unsaturated fatty acid has(have) been substituted by epoxy group (s) with a $C_1$-$C_{10}$ alcohol having from 1 to 8 hydroxy group(s), such as palmitic acid mono-, di- or triester, stearic acid mono-, di- or triester, oleic acid mono-, di- or triester, linoleic acid mono-, di- or triester, and the like. As long as liquid-liquid phase separation from polyethylene at 160-280°C is possible, the above-mentioned substances may be used in combination. Particularly, it is possible to further use at least one substance selected from paraffin oil, mineral oil and wax.

If the temperature of liquid-liquid phase separation is lowered below 160°C, the temperature of the end portion of the extrusion should be lowered sufficiently below 160°C for sufficient progression of liquid-liquid phase separation. However, in this case, polyethylene is not melted sufficiently because extrusion is carried out at a temperature close to the melting point of polyethylene. As a result, viscosity increases greatly, thereby resulting in excessive mechanical load to the extruder. Further, a normal extrusion processing is not feasible because the sheet surface becomes rough. On the contrary, if the temperature of liquid-liquid phase separation is increased above 280°C, compounding should be carried out at a temperature higher than 280°C in order to form a thermodynamic single phase at the early stage of extrusion. However, at such a high temperature, oxidative decomposition of the composition occurs rapidly. As a result, it is not possible to produce products having desired physical properties.

Preferably, the contents of polyethylene and the diluent used in the present invention are 20-55 wt% and 80-45 wt% respectively. If the content of polyethylene exceeds 55 wt% (i.e., if the content of the diluent is less than 45 wt%), permeability is reduced greatly because of decreased porosity and reduction in pore size and insufficient interconnection among pores follows. On the other hand, if the content of polyethylene is less than 20 wt% (i.e., if the content of the diluents exceeds 80 wt%), there may occur such problems as breakage, uneven thickness, and the like during stretching, because polyethylene and the diluent are extruded in gel form without being thermodynamically compounded.

If necessary, additives usually used to improve specific functions, such as oxidation stabilizer, UV stabilizer, antistatic agent, and the like may be further included in the composition.

The composition is melt-extruded at a temperature higher than that of liquid-liquid phase separation of the composition using a twin screw compounder, kneader, Banbury mixer, or the like specially designed for the compounding of the diluent and polyethylene to obtain a mixture in a single phase. Thus obtained single-phase molten material is passed through a twin screw compounder, kneader, Banbury mixer, or the like the temperature of which is maintained at least 10°C lower than the temperature of liquid-liquid phase separation with a residence time longer than 30 seconds, so that liquid-liquid phase separation occurs and proceeds in the processing machine. The molten material phase-separated inside the processing machine is formed into a sheet as it is extruded through a die and cooled. Polyethylene may be blended with oil in advance and then introduced to a compounder. Alternatively, they may be supplied from separate feeders. If the temperature at which phase separation occurs and proceeds in the processing machine is higher than the temperature of liquid-liquid phase separation minus 10°C or the residence time in the phase separation section is shorter than 30 seconds, pore size becomes small and permeability of the final product decreases, due to insufficient phase separation. Further, because a relatively large amount of the diluent remains in the polyethylene rich phase, orientation effect is reduced during stretching. As a result, mechanical properties are not improved.

The methods for forming the molten material into a sheet may be general casting or calendaring methods utilizing water-cooling or air-cooling.

Next, stretching may be conducted by sequential or simultaneous stretching using a roll or a tenter. Preferably, the stretch ratio is at least 4 times in the machine and transverse directions, respectively, and the total stretch ratio is 25-50 times. If the stretch ratio in one direction is less than 4 times, orientation along the one direction is not sufficient, and the physical balance in the machine and transverse directions is broken. As a result, tensile strength, puncture strength, or the like are reduced. Stretching becomes insufficient if the total stretch ratio is less than 25 times. On the other hand, if the total stretch ratio exceeds 50 times, it is highly likely that breakage may occur during stretching, and shrinkage of the final film may be increased undesirably. The stretching temperature may vary depending on the composition, but it is preferable to perform stretching at a temperature 3-20°C lower than the melting temperature of the polyethylene. If stretching is carried out at a temperature higher than the melting temperature of the polyethylene minus 3°C, the strength of the film inside the stretching machine becomes too weak, and, therefore, stretching is done unevenly. On the other hand, if stretching is carried out at a temperature lower than the melting temperature of the polyethylene minus 20°C, it is highly likely that relatively large sized holes such as pin holes are formed, and the sheet becomes susceptible to breakage during working.

The stretched film is extracted using an organic solvent, and then dried. Organic solvents that can be used in the present invention are not particularly restricted, but any solvent capable of extracting out the diluent used to extrude the resin may be used. Preferably, methyl ethyl ketone, methylene chloride, hexane, and the like may be used because they are efficient for extraction and are dried promptly. As to the extraction method, any conventional solvent extraction process may be used alone or in combination, including immersion, solvent spraying, ultrasonication, or the like. Upon extraction, the content of residual diluent should be not more than 2 wt%. If the content of residual diluents exceeds 2 wt%, physical properties of the film are deteriorated and permeability of the film decreases. The content of residual diluent (or the extraction rate) is greatly dependent upon extraction temperature and extraction time. A higher extraction temperature will be desired in view of solubility of the diluent in the solvent. However, when considering safety problem associated with boiling of the solvent, an extraction temperature not higher than 40°C is preferred. The extraction temperature should by higher than the solidifying point of the diluent because the extraction efficiency decreases significantly at a temperature lower than the solidifying point. Extraction time may vary depending on the thickness of the film to be produced. An extraction time of 2-4 minutes will be appropriate in case of producing general microporous films having a thickness from 10 to 30 $\mu$m.

The dried film is subjected to heat-setting in order to reduce shrinkage of the final film by removing residual stress. Heat-setting refers to the process of removing residual stress by fixing the film and applying heat while forcibly holding the film. A higher heat-setting temperature is advantageous in reducing shrinkage. However, if the heat-setting temperature is too high, permeability may be decrease as the film is partly melted, thereby resulting in clogging of micropores. It is preferred that the heat-setting temperature is selected within the temperature range at which 10-30 wt% of the crystalline portion of the film is melted. If the heat-setting temperature is lower than the temperature at which 10 wt% of the crystalline portion of the film is melted, reorientation of polyethylene molecules in the film is insufficient, and thus, the effect of removing residual stress of the film is not attained. Also, if the heat-setting temperature is higher than the temperature at which 30 wt% of the crystalline portion of the film is melted, permeability is lowered because the micropores are clogged due to partial melting of the film.

The heat-setting time should be relatively shorter when the heat-setting temperature is high, and may be relatively longer when the heat-setting temperature is low. Preferably, a heat-setting time from about 15 seconds to about 2 minutes is adequate.

Then, the microporous polyethylene film with high porosity, large pore size and improved wettability in electrolyte obtained from the liquid-liquid phase separation process is subjected to plasma treatment, in order to enhance surface energy.

Plasma is often called the "fourth state of matter." It can be reached by applying a large quantity of energy to an ordinary gas. Plasma is an electrically neutral medium of ionized particles - neutral gaseous atoms, protons and electrons. With a very high reactivity, it is widely used in many industrial fields. Examples include semiconductor plasma etching, plasma enhanced chemical vapor deposition (PECVD), thin film deposition, decomposition of pollutant gases such as sulfur oxides and nitrogen oxides, ozone generation, surface treatment of metals or polymers, synthesis of new materials, or the like.

Plasma is classified into low-temperature plasma and high-temperature plasma, based on applied temperature. In glow discharge, which is a typical low-temperature plasma, when a voltage of several hundred volts is applied in vacuum between two electrodes, cations in the plasma collide with the cathode to form secondary electrons, which are accelerated by an external electric field to ionize neutral gas. Electrons generated in this process ionize other neutral gas. Through the repeated electron avalanche, current flows between the two electrodes. When the current is increased in the glow discharge state, a very-high-temperature ($\geq 10^9$ K) plasma is established. This is arc discharge, which is a typical high-temperature plasma, and is used for manufacturing of nuclear fusion apparatuses.

Those plasma technologies above require a vacuum state. Since the vacuum plasma process requires a high vacuum, it is disadvantageous in that the cost of installation and maintenance is high, shape and size of apparatuses are restricted, and continuous processing is limited. In contrast, the atmospheric pressure plasma process is advantageous in that the risk of thermal decomposition of material is not high because the plasma temperature is below 150°C, the cost of installation and maintenance is not high because the process is carried out under atmospheric pressure without special vacuum apparatus, productivity can be improved through a continuous process, and shape and size of apparatuses can be selected as desired.

General methods for producing plasma under atmospheric pressure include pulsed corona discharge and dielectric barrier discharge. In corona discharge, plasma is produced by applying a high-voltage pulse. In dielectric barrier discharge, two electrodes are separated by an insulating dielectric barrier, and plasma is produced by applying a high voltage alternating current with frequencies ranging from several dozen Hz to several MHz.

In an embodiment of the present invention, dielectric barrier discharge type atmospheric pressure plasma is used to enhance surface energy of the microporous polyethylene film. Oxygen is used as reactive gas to produce hydrophilic groups, and nitrogen is used as carrier gas in order to produce uniform plasma under atmospheric pressure over a large area, even with a low voltage. Also, at least one of sulfur oxides, water vapor, carbon monoxide, carbon dioxide, etc. may be used as reactive gas, and at least one inert gas such as helium, argon, neon, etc. may be used as carrier gas. The scope of the present invention is not limited by the exemplified reactive gas or carrier gas.

The plasma treatment above may be carried out by providing the microporous polyethylene film between a pair of electrodes facing each other under atmospheric pressure and performing plasma discharge on both surfaces of the film simultaneously by injecting carrier gas and reactive gas. Alternatively, the plasma discharge may be performed sequentially on both surfaces, using two or more electrodes. This process may be carried out at least once in order to increase surface energy to 50 dynes/cm$^2$ or higher. As used hrerein, atmospheric pressure (or normal pressure) refers to a pressure ranging from 700 or 780 Torr. More specifically, it is preferred that the distance between the electrode from which plasma is discharged and the microporous film is from 0.1 to 10 mm, and the contact time of the plasma with the microporous film is at least 0.1 second. If the distance between the electrode from which plasma is discharged and the microporous film is too short, the film may be deformed or degraded due to the heat generated from the electrode. Also, if the distance is too long or the contact time with the plasma is too short, the effect of plasma treatment may be insufficient.

According to experiments, the microporous polyethylene film of the present invention had a surface energy of 40-42 dynes/cm$^2$ before plasma treatment, and a surface energy of at least 50 dynes/cm$^2$ after plasma treatment. Further, it was confirmed that wettability in electrolyte for a lithium secondary battery was improved significantly by the plasma treatment.

As described, the microporous polyethylene film of the present invention is prepared by:

(a) melting, compounding and extruding a mixture comprising 20-55 wt% polyethylene (Component I) and 80-45 wt% diluent (Component II), which is liquid-liquid phase separable from Component I at 160-280°C, above the temperature of liquid-liquid phase separation in an extruder to form a thermodynamic single phase;
(b) passing the resultant molten material through a zone at which the temperature is maintained in the temperature range of liquid-liquid phase separation to carry out liquid-liquid phase separation, and extruding through a die;
(c) forming the liquid-liquid phase-separated and extruded molten material into a sheet;
(d) stretching the sheet by sequential or simultaneous stretching using a roll or a tenter at a stretch ratio of at least 4 times in transverse and machine directions, respectively, and at a total stretch ratio of 25-50 times;
(e) extracting Component II from the stretched film, and drying;
(f) heat-setting the dried film to remove residual stress from the dried film, such that shrinkage of the film in the transverse and machine directions is not more than 5% at 105 °C for 10 minutes and not more than 15% at 120°C for 60 minutes, respectively; and
(g) treating both surfaces of the heat-set film at least once with plasma discharge under atmospheric pressure simultaneously or sequentially, in order to increase surface energy.

Thus prepared microporous polyethylene film of the present invention has the following physical properties.

(1) The puncture strength is at least 0.17 N/$\mu$m
Puncture strength is a measure of film toughness against sharp objects. When the microporous film is used for a battery separator, insufficient puncture strength may result in the tearing of the film due to an abnormal surface state of the electrode or by the dendrites formed on the electrode surface. As a result, a short circuit may occur. When the film of the present invention having a puncture strength of at least 0.17 N/$\mu$m is used with the thinnest thickness of currently used commercial separator films, that is 16 $\mu$m, the break point weight is larger than 272 g. Accordingly, it may be safely used for all purposes.
(2) The air permeability (Darcy's permeability constant) is at least $2.0 \times 10^{-5}$ Darcy.
A larger air permeability is preferred. If the air permeability is $2.0 \times 10^{-5}$ Darcy or greater, the efficiency of the film as a porous film is increased greatly, and the ion permeability as well as the charge/discharge characteristics of the battery are improved. The film of the present invention having a air permeability of at least $2.0 \times 10^{-5}$ Darcy provides a battery with superior charge/discharge characteristics, including high charge/discharge ratio, superior low-temperature characteristics and long lifetime.
(3) The product of the air permeability and the puncture strength is at least $0.34 \times 10^{-5}$ Darcy·N/$\mu$m.

In actual processing, the puncture strength is lowered if the air permeability is increased, and vice versa. Accordingly, a separator having a large value of the product of the puncture strength and the air permeability may be seen as one having superior puncture strength and air permeability at the same time. As the separator according to the present invention has a product of the puncture strength and the air permeability $0.34 \times 10^{-5}$ Darcy·N/$\mu$m or greater, both of the characteristics are superior.

(4) The weighted average pore size determined by capillary flow porometry is at least 30 nm.

This value becomes larger as the number of large sized pores increases. Also, this value tends to be proportional to the air permeability.

(5) The film shrinkage in the transverse and machine directions is not more than 5% at 105°C for 10 minutes and not more than 15% at 120°C for 60 minutes, respectively.

The shrinkage is measured after the film is stood still at a given temperature for a given period of time. When the shrinkage is large, the film may shrink due to the heat generated during charge and discharge of the battery, thereby impairing stability of the battery. Thus, a smaller shrinkage is preferred. When used for a battery separator, the microporous polyethylene film of the present invention, which has a shrinkage in the transverse and machine directions is not more than 5% at 105°C for 10 minutes and not more than 15% at 120°C for 60 minutes, respectively, prevents a short circuit which may occur as the electrodes contact with each other caused by thermal shrinkage.

(6) The surface energy is at least 50 dynes/cm$^2$.

The compatibility with the electrolyte for a lithium secondary battery is improved as the surface energy is higher. As a result, wetting rate and wettability with electrolyte are improved, and improvement of battery capacity can be expected. In particular, it is known that the battery lifetime is improved when the separator has good electrolyte impregnability.

Alongside with the aforesaid physical properties, the microporous polyethylene film of the present invention has superior extrusion compoundability and stretchability.

## BEST MODE FOR INVENTION

The following examples illustrate the present invention in more detail, but they are not intended to limit the scope of the present invention.

## EXAMPELS:

Molecular weight of polyethylene and distribution thereof were measured using GPC (gel permeation chromatography) system (Polymer Laboratory).

Viscosity of the diluent was measured using CAV-4 automatic viscometer of Cannon INC. Polyethylene and the diluent were compounded in a twin screw extruder ($\phi$ = 30 mm). The twin screw extruder had a total of 20 sections from feeding zone to the die, each section having the same length except for the last die portion. The screws were installed over the first 12 sections, and the UD ratio of the screw was 47. A gear pump was installed at the 14th section so that sheets with constant thickness could be produced. The residence time in the extruder was about 6 minutes, although it differed a little depending on the composition. Specifically, the residence time up to the pressure gauge provided between the 13th and 14th sections was about 3 minutes, and thus, the time taken to pass through the 14th to 20th sections was deemed to be about 3 minutes. Assuming that the time taken to pass through the 14th to 20th sections was constant, it is calculated that about 26 seconds was taken to pass each section. In order to induce liquid-liquid phase separation inside the extruder, experiments were carried out while changing the temperature of the composition from the 15th to 20th sections and comparing them with the temperature of liquid-liquid phase separation.

The molten material was extruded through a T-shaped die, formed into a 600-1,200 $\mu$m -thick sheet by a casting roll, and subjected to stretching.

Stretching of the sheet was carried out simultaneously using a tenter-type continuous stretching machine, while changing stretch ratio and stretching temperature. Stretching rate was maintained at 2.0 m/min.

Extraction of the diluent was carried out by immersion using methylene chloride. Residence time inside the extracting machine was 2 minutes, and the content of residual diluent in the film was maintained at 2% or less.

Heat-setting was carried out by, after drying the diluent-extracted film in the air, fixing the film to a tenter-type continuous frame and varying temperature and time in a convection oven.

The formed film was subjected to DSC analysis in order to analyze melting of the crystalline portion of the film depending on temperature. Analysis condition was sample weight = 5 mg, and scanning rate was 10 °C/min.

# Measurement of physical properties

(1) Tensile strength was measured according to ASTM D882.

(2) Puncture strength was measured as the strength when the film was punctured by a pin having a diameter of 0.5 mm at a speed of 120 mm/min.

(3) Air permeability was measured using a porometer (CFP-1500-AEL, PMI). Air permeability is usually expressed using Gurley number. However, with the Gurley number, it is difficult to measure the relative permeability with respect to the pore structure of the film itself, because the effect of the film thickness is not corrected. To avoid this problem, Darcy's permeability constant was used instead. Darcy's permeability constant is obtained by the following Equation 1. Nitrogen was used in the present invention.

## Equation 1

$$C = (8\ FTV) / (\pi D^2 (P^2-1))$$

where

C = Darcy's permeability constant,
F = flow rate,
T = sample thickness,
V = viscosity of gas (0.185 for $N_2$),
D = sample diameter, and
P = pressure.

In the present invention, average value of Darcy's permeability constant in the pressure range from 100 to 200 psi was used.

(4) Pore size was measured using a capillary flow porometry using a porometer (CFP-1500-AEL, PMI). It is attained by soaking the microporous polyethylene film in a liquid with known surface tension (galwick), and measuring the quantity of nitrogen gas passing through pores while increasing pressure of the nitrogen gas from 0 to 400 psig. The pore size is calculated by the following Equation 2.

## Equation 2

$$P = 4\gamma\cos\theta/d$$

where

p = pressure change across the pores,
$\gamma$ = surface tension of the liquid,
$\theta$ = contact angle the liquid, and
d = pore diameter,

Pore size and distribution thereof are obtained from Equation 2. Then, weighted average pore size may be obtained from the following Equation 3.

## Equation 3

$$\text{Weighted average pore size} = (\Sigma d_i^2 \times f_i) / (\Sigma d_i \times f_i)$$

Where

$d_i$ = diameter of i-th pore, and
$f_i$ = frequency ratio of i-th pore.
For reference, $\Sigma f_i = 1$.

(5) Shrinkage was measured in %, in machine and transverse directions, after the microporous polyethylene film was stood still at 105°C for 10 minutes and at 120°C for 60 minutes.

(6) Surface energy was measured by drawing lines on the surface of the separator film using a cotton applicator soaked in a dyne solution of UV Process Supply, and checking continuity of the wet lines.

(7) wettability of the microporous polyethylene film in electrolyte was measured as follows.

After keeping at room temperature and relative humidity (R.H.) 50%, the microporous polyethylene film was cut to a size of 10×10 cm. After weighing initial weight (A), the film was immersed in electrolyte for 1 hour. After wiping out the electrolyte from the film surface using tissue paper, weight (B) was measured again. wettability was averaged for at least 5 samples.wettability was calculated by the following Equation 4.

## Equation 4

$$\% \text{ wettability} = ((B-A)/A) \times 100$$

For the electrolyte, a solution prepared by dissolving 1 M lithium hexafluorophosphate ($LiPF_6$) in a 1:1 (w/w) mixture of ethylene carbonate (EC) and dimethyl carbonate (DMC) was used.

### Example 1

High density polyethylene having a weight average molecular weight of $2.1 \times 10^5$ and a melting temperature of 135 °C was used as Component I, and dibutyl phthalate (Component A in the following tables) was used as Component II. The contents of Component I and Component II were 40 wt% and 60 wt% respectively.

Phase separation was carried out by setting the temperature of the first 12 sections of the total of 20 sections at 250°C, the temperature of the 13th and 14th sections at 220°C, and the temperature of the 15th through 20th sections at 185°C, which was lower than the temperature of liquid-liquid phase separation. Stretching temperature was 127°C, and stretch ratio in the machine and transverse directions was 6 times respectively. After extracting Component II for 2 minutes by immersion using methylene chloride, heat-setting was carried out at 120°C for 15 seconds. Then, plasma was discharged under atmospheric pressure by using dielectric barrier discharge type electrodes, and supplying nitrogen at 300 mL/min as carrier gas and oxygen at 1 mL/min as reactive gas (power = 3.6 kW, voltage = 12 kV). Both surfaces of the microporous polyethylene film were simultaneously contacted with the plasma once, for 3 seconds. During the plasma discharge, the distance between the electrode and the microporous film was fixed at 3 mm.

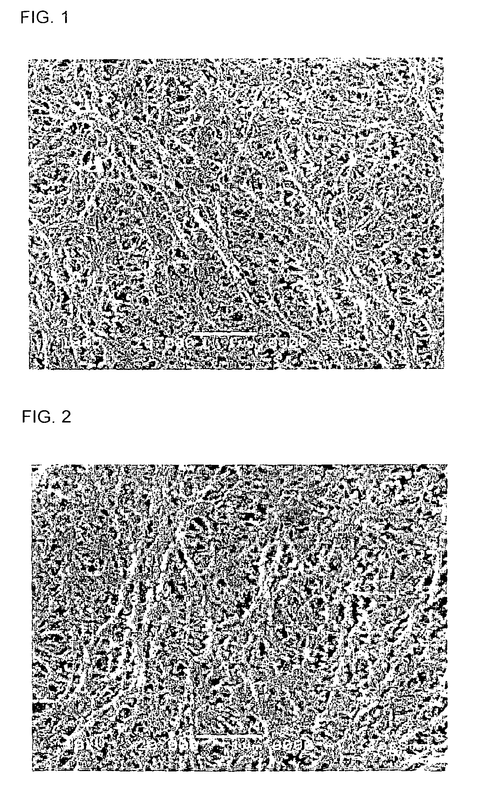

Pore structure of the microporous film before and after the plasma treatment was observed by scanning electron microscopy (SEM). As seen in FIG. 1 and FIG. 2, the pore structure did not change. This was observed throughout all samples.

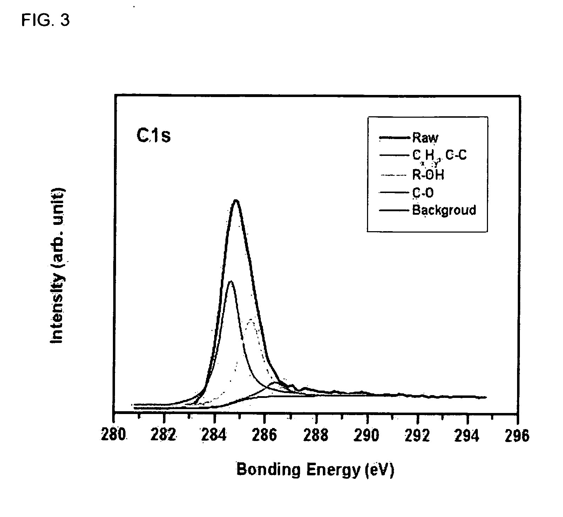

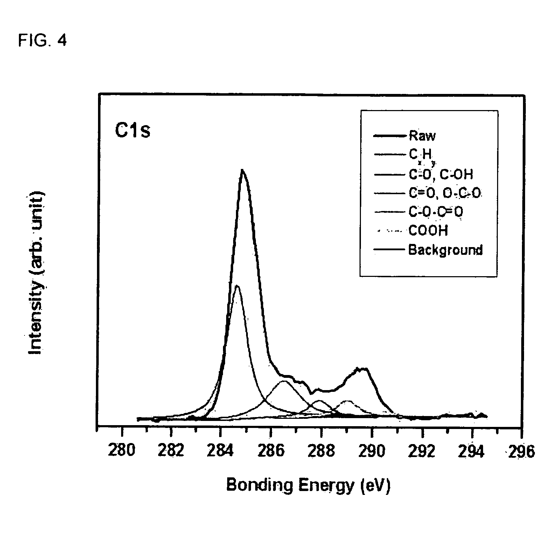

FIG. 3 and FIG. 4 show X-ray photoelectron spectroscopy (XPS) result for the microporous polyethylene film before and after plasma treatment. It was confirmed that hydrophilic groups such as carboxyl, carbonyl, and the like were produced by the plasma treatment.

Tensile strength, puncture strength, air permeability, weighted average pore size, shrinkage, surface energy and % wettability measurement result for Example 1 is given in Table 1, along with those of Examples 2-5.

### Example 2

High density polyethylene having a weight average molecular weight of $3.8 \times 10^5$ and a melting temperature of 132°C was used as Component I. The contents of Component I and Component II were 20 wt% and 80 wt% respectively.

Stretching was carried out at 120°C, and stretch ratio was 49 times (machine direction = 7 times, transverse direction = 7 times). Heat-setting was carried out at 118°C in order to adjust the degree of crystal melting to 20 wt%. Heat-setting time was 18 seconds. Other processes were the same as in Example 1.

### Example 3

High density polyethylene having a weight average molecular weight of $3.8 \times 10^5$ and a melting temperature of 133°C was used as Component I. The contents of Component I and Component II were 55 wt% and 45 wt% respectively.

Stretching was carried out at 130°C, and stretch ratio was 25 times (machine direction = 5 times, transverse direction = 5 times). Heat-setting was carried out at 117°C for 20 seconds. Other processes were the same as in Example 1.

**Example 4**

High density polyethylene used in Example 2 was used as Component I, and a 1:2 mixture of dibutyl phthalate and paraffin oil having a kinetic viscosity of 160 cSt at 40 °C (Component B in the following tables) was used as Component II. The contents of Component I and Component II were 40 wt% and 60 wt% respectively.

Extrusion temperature at the screw portion was maintained at 210°C, and phase separation sufficiently induced by setting the temperature of the 14th through 20th sections at 150°C. Stretching was carried out at 122°C. Other processes were the same as in Example 1, except for using helium as carrier gas and contacting the microporous film with the plasma twice, for 2 seconds, during the plasma treatment.

**Example 5**

High density polyethylene used in Example 2 was used as Component I, and a 1:2 mixture of oleic acid triglyceride and linoleic acid triglyceride (Component C in the following tables) was used as Component II. The contents of Component I and Component II were 40 wt% and 60 wt% respectively.

Extrusion temperature at the screw portion was maintained at 210°C, and phase separation sufficiently induced by setting the temperature of the 14th through 20th sections at 160°C. Stretching was carried out at 125°C. Other processes were the same as in Example 1.

**Comparative Example 1**

High density polyethylene used in Example 2 was used as Component I, and dibutyl phthalate (Component A in the following tables) was used as Component II. The contents of Component I and Component II were 40 wt% and 60 wt% respectively. The temperature of the 14th through 20th sections was maintained at 230°C, so that phase separation might occur after the molten material came out of the die. Stretching was carried out at 118°C, and the stretch ratio in the machine and transverse directions was 6 times, respectively. After extracting Component II for 2 minutes by immersion using methylene chloride, heat-setting was carried out at 120°C for 15 seconds. Plasma treatment was not carried out.

Tensile strength, puncture strength, air permeability, weighted average pore size, shrinkage, surface energy and % impregnation measurement result for Comparative Example 1 is given in Table 2, along with those of Comparative Examples 2-5.

**Comparative Example 2**

All the processes were the same as Comparative Example 1, except that the temperature of the 14th through 20th sections was maintained at 185°C, which was lower than the temperature of liquid-liquid phase separation, so that phase separation might occur sufficiently inside the extruder. Stretching was carried out at 118°C, and plasma treatment was not carried out.

**Comparative Example 3**

High density polyethylene used in Example 4 was used as Component I, and dibutyl phthalate (Component A in the following tables) was used as Component II. The contents of Component I and Component II were 40 wt% and 60 wt% respectively.

Stretching was carried out at 117°C, and other processes were the same as Example 1, except that the distance between the electrode and the microporous film during plasma treatment was 20 mm.

**Comparative Example 4**

High density polyethylene having a weight average molecular weight of $3.8 \times 10^5$ was used as Component I. All the processes were the same as Example 1, except that the contents of Component I and Component II were 15 wt% and 85 wt% respectively, and stretching temperature was 115 °C.

**Comparative Example 5**

High density polyethylene having a weight average molecular weight of $3.8 \times 10^5$ was used as Component I. All the processes were the same as Example 1, except that the contents of Component I and Component II were 60 wt% and 40 wt% respectively, and stretching temperature was 128 °C.

## Comparative Example 6

High density polyethylene used in Example 4 was used as Component I, and paraffin oil having a kinetic viscosity of 120 cSt at 40°C (Component D in the following tables) was used as Component II. The contents of Component I and Component II were 40 wt% and 60 wt% respectively. Stretching and plasma treatment were carried out in the same as in Example 1.

The experimental conditions and results of Examples and Comparative Examples above are summarized in Tables 1 an 2 as below.

Table 1

| Examples | | | | 1 | 2 | 3 | 4 | 5 |
|---|---|---|---|---|---|---|---|---|
| Manufacturing conditions | | | Unit | | | | | |
| High density polyethylene (Component I) | Mw | | g/mol | $2.1 \times 10^5$ | $3.8 \times 10^5$ | $3.8 \times 10^5$ | $3.8 \times 10^5$ | $3.8 \times 10^5$ |
| | Content | | wt% | 40 | 20 | 55 | 40 | 40 |
| Diluent (Component II) | Component | | - | A | A | A | B | C |
| | Content | | wt% | 60 | 80 | 45 | 60 | 60 |
| Extrusion | Residence time below phase separation temperature | | sec | 160 | 180 | 180 | 190 | 190 |
| Stretching | Temperature | | °C | 127 | 122 | 130 | 122 | 125 |
| | Ratio (MD×TD) | | Ratio | 6×6 | 7×7 | 5×5 | 6×6 | 6x6 |
| Heat-setting | Temperature | | °C | 120 | 118 | 117 | 120 | 120 |
| | Molten crystal | | % | 20 | 20 | 10 | 20 | 20 |
| | Time | | sec | 15 | 18 | 20 | 15 | 15 |
| Film thickness | | | Mm | 16 | 17 | 16 | 16 | 16 |
| Puncture strength | | | N/μm | 0.18 | 0.18 | 0.28 | 0.23 | 0.22 |
| Air permeability | | | $10^{-5}$ Darcy | 3.8 | 5.0 | 2.1 | 2.7 | 2.3 |
| Weight average pore size | | | Nm | 38 | 44 | 34 | 35 | 32 |
| Puncture strength × Air permeability | | | $10^{-5}$ Darcy·N/μm | 0.68 | 0.90 | 0.59 | 0.62 | 0.51 |
| Surface energy | | | Dynes/cm$^2$ | 63 | 62 | 58 | 54 | 67 |
| Electrolyte wettability | | | % | 134 | 142 | 120 | 127 | 123 |
| Shrinkage (105 °C, 10 min) | | MD | % | 3.5 | 4.3 | 3.7 | 3.3 | 3.8 |
| | | TD | | 1.5 | 2.5 | 3.4 | 1.7 | 1.9 |
| Shrinkage (125 °C, 60 min) | | MD | | 13.7 | 14.5 | 12.7 | 13.3 | 13.1 |
| | | TD | | 12.8 | 14.4 | 10.0 | 12.3 | 12.0 |

Table 2

| Comparative Examples | | | 1 | 2 | 3 | 4 | 5 | 6 |
|---|---|---|---|---|---|---|---|---|
| Manufacturing conditions | | Unit | | | | | | |
| High density polyethylene (Component I) | Mw | g/mol | $3.8\times10^5$ | $3.8\times10^5$ | $3.8\times10^5$ | $3.8\times10^5$ | $3.8\times10^5$ | $3.8\times10^5$ |
| | Content | wt% | 40 | 40 | 40 | 15 | 60 | 40 |
| Diluent (Component II) | Component | - | A | A | A | A | A | D |
| | Content | wt% | 60 | 60 | 60 | 85 | 40 | 60 |
| Extrusion | Residence time below phase separation temperature | sec | 0 | 180 | 160 | 170 | 190 | 210 |
| Stretching | Temperature | °C | 118 | 118 | 117 | 115 | 128 | 127 |
| | Ratio (MD×TD) | ratio | 6×6 | 6×6 | 6×6 | 7x7 | 5×5 | 6×6 |
| Heat-setting | Temperature | °C | 120 | 120 | 120 | 118 | 117 | 120 |
| | Molten crystal | % | 20 | 20 | 20 | 20 | 10 | 20 |
| | Time | Sec | 15 | 15 | 15 | 15 | 15 | 15 |
| Film thickness | | μm | 16 | 16 | 16 | 15 | 17 | 16 |
| Puncture strength | | N/μm | 0.21 | 0.20 | 0.20 | 0.10 | 0.28 | 0.23 |
| Air permeability | | $10^{-5}$ Darcy | 1.7 | 2.8 | 1.9 | 4.6 | 1.6 | 2.6 |
| Weight average pore size | | nm | 27 | 34 | 28 | 44 | 47 | 27 |
| Puncture strength × Air permeability | | $10^{-5}$ Darcy·N/μm | 0.36 | 0.56 | 0.38 | 0.46 | 0.45 | 0.39 |
| Surface energy | | Dynes/cm$^2$ | 40 | 41 | 45 | 65 | 60 | 59 |
| Electrolyte wettability | | % | 107 | 110 | 115 | 122 | 137 | 124 |
| Shrinkage (105 °C, 10 min) | MD | % | 3.2 | 3.4 | 3.2 | 3.3 | 6.0 | 5.2 |
| | TD | | 1.8 | 1.7 | 1.7 | 2.5 | 4.6 | 3.1 |
| Shrinkage (125 °C, 60 min) | MD | | 14.1 | 14.4 | 13.8 | 13.3 | 18.8 | 17.6 |
| | TD | | 14.3 | 14.6 | 12.2 | 14.0 | 18.4 | 18.4 |

Although the preferred embodiments of the invention have been disclosed for illustrative purposes, those skilled in the art will appreciate that various modifications, additions and substitutions are possible, without departing from the scope and spirit of the invention as disclosed in the accompanying claims

## Claims

1. A microporous polyethylene film having a surface energy of at least 50 dynes/cm$^2$, a air permeability (Darcy's permeability constant) of at least $2.0\times10^{-5}$ Darcy, a puncture strength of at least 0.17 N/m, a product of the air permeability and the puncture strength of at least $0.34 \times 10^{-5}$ Darcy·N/m, a weighted average pore size of at least 30 nm, and a film shrinkage in the transverse and machine directions of not more than 5% at 105 °C for 10 minutes and not more than 15% at 120 °C for 60 minutes, respectively.

2. A microporous polyethylene film for a lithium secondary battery separator prepared by:

(a) melting, compounding and extruding a mixture comprising 20-55 wt% polyethylene (Component I) and 80-45 wt% diluent (Component II), which is liquid-liquid phase separable from Component I at 160-280°C, above the temperature of liquid-liquid phase separation in an extruder to form a thermodynamic single phase;
(b) passing the resultant molten material through a zone at which the temperature is maintained in the temperature range of liquid-liquid phase separation to carry out liquid-liquid phase separation, and extruding through a die;
(c) forming the liquid-liquid phase-separated and extruded molten material into a sheet;
(d) stretching the sheet by sequential or simultaneous stretching using a roll or a tenter at a stretch ratio of at least 4 times in transverse and machine directions respectively, and at a total stretch ratio of 25-50 times;
(e) extracting Component II from the stretched film, and drying;
(f) heat-setting the dried film to remove residual stress from the dried film, such that shrinkage of the film in the transverse and machine directions is not more than 5% at 105 °C for 10 minutes and not more than 15% at 120 °C for 60 minutes respectively; and
(g) treating both surfaces of the heat-set film at least once with plasma discharge under atmospheric pressure simultaneously or sequentially, in order to increase surface energy.

3. The microporous polyethylene film for a lithium secondary battery separator as set forth in claim 2, wherein, in the step (g) above, the distance between the electrode from which plasma is discharged and the microporous polyethylene film is from 0.1 to 10 mm, and the contact time of the plasma with the microporous film is at least 0.5 second.

4. The microporous polyethylene film as set forth in claim 2, wherein Component I is a polyethylene having a weight average molecular weight from $2 \times 10^5$ to $4.5 \times 10^5$.

5. The microporous polyethylene film as set forth in claim 2, wherein Component II is at least one selected from a phthalic acid ester such as dibutyl phthalate, dihexyl phthalate, dioctyl phthalate, and the like; an aromatic ether such as diphenyl ether, benzyl ether, and the like; a $C_{10}$-$C_{20}$ fatty acid such as palmitic acid, stearic acid, oleic acid, linoleic acid, linolenic acid, and the like; a $C_{10}$-$C_{20}$ fatty alcohol such as palmityl alcohol, stearyl alcohol, oleyl alcohol, and the like; and a fatty acid ester derived from esterification of a saturated or unsaturated fatty acid having from 4 to 26 carbon atoms in the fatty acid group or one or more unsaturated fatty acid wherein the double bond(s) thereof has(have) been substituted by epoxy group(s) with a $C_1$-$C_{10}$ alcohol having from 1 to 8 hydroxy group(s), such as palmitic acid mono-, di- or triester, stearic acid mono-, di- or triester, oleic acid mono-, di- or triester, linoleic acid mono-, di- or triester, and the like.

6. The microporous polyethylene film as set forth in claim 2, wherein Component II further comprises at least one component selected from paraffin oil, mineral oil and wax.

7. The microporous polyethylene film as set forth in claim 2, wherein the extrusion temperature in the liquid-liquid phase separation state is maintained is at least 10 degrees lower than the temperature of liquid-liquid phase separation and the residence time in the liquid-liquid phase separation state inside the extruder is at least 30 seconds.

FIG. 1

FIG. 2

FIG. 3

FIG. 4

Europäisches
Patentamt
European
Patent Office
Office européen
des brevets

## EUROPEAN SEARCH REPORT

Application Number

EP 08 01 6880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/190303 A1 (LEE YOUNG-KEUN [KR] ET AL HWA [KR] ET AL) 16 August 2007 (2007-08-16) * claims 1-14; examples 1-5 * | 1-7 | INV. C08K5/00 |
| X | WO 2006/123850 A (SK CORP [KR]; LEE YOUNG-KEUN [KR]; RHEE JANG-WEON [KR]; SUNG JUNG-MOON) 23 November 2006 (2006-11-23) * claims 1-9; examples 1-9 * | 1-7 | |
| X | WO 2006/123849 A (SK CORP [KR]; LEE YOUNG-KEUN [KR]; RHEE JANG-WEON [KR]; SUNG JUNG-MOON) 23 November 2006 (2006-11-23) * claims 1-6; examples 1-11 * | 1-7 | |
| X | US 2005/277702 A1 (LEE YOUNG K [KR] ET AL LEE YOUNG KEUN [KR] ET AL) 15 December 2005 (2005-12-15) * claims 1-8; examples 1-11 * | 1-7 | |
| X | WO 2006/107125 A (SK CORP [KR]; LEE YOUNG KEUN [KR]; RHEE JANG WEON [KR]; SUNG JUNG MOON) 12 October 2006 (2006-10-12) * claims 1-9; examples 1-17 * | 1-7 | TECHNICAL FIELDS SEARCHED (IPC) C08K |
| X | EP 1 614 710 A (ASAHI CHEMICAL CORP [JP]) 11 January 2006 (2006-01-11) * claims 1-13; examples 1-9 * | 1-7 | |
| X | WO 99/65093 A (DSM NV [NL]; CALIS GIJSBERTUS HENDRIKUS MAR [NL]) 16 December 1999 (1999-12-16) * claims 1-6; example 1 * | 1-7 | |
| X | WO 98/17714 A (PPG INDUSTRIES INC [US]) 30 April 1998 (1998-04-30) * claims 1-29; examples 1-5 * | 1-7 | |

-/--

The present search report has been drawn up for all claims

| Place of search | Date of completion of the search | Examiner |
|---|---|---|
| Munich | 28 January 2009 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

**Application Number**

EP 08 01 6880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 547 237 A (ASAHI CHEMICAL IND [JP]) 23 June 1993 (1993-06-23) * claims 1-24; examples 1-11 * ----- | 1-7 | |
| X | US 4 620 956 A (HAMER EDWARD A G [US]) 4 November 1986 (1986-11-04) * claims 1-18; examples I-XXV * ----- | 1-7 | |
| | | | **TECHNICAL FIELDS SEARCHED (IPC)** |

The present search report has been drawn up for all claims

| Place of search | Date of completion of the search | Examiner |
|---|---|---|
| Munich | 28 January 2009 | Glomm, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 060 599 A1

## ANNEX TO THE EUROPEAN SEARCH REPORT
## ON EUROPEAN PATENT APPLICATION NO.                EP 08 01 6880

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2009

| Patent document cited in search report | Publication date | Patent family member(s) | Publication date |
|---|---|---|---|
| US 2007190303 A1 | 16-08-2007 | CN 101309953 A<br>EP 1984435 A1<br>WO 2007094530 A1<br>KR 20070081804 A<br>US 2007190304 A1 | 19-11-2008<br>29-10-2008<br>23-08-2007<br>20-08-2007<br>16-08-2007 |
| WO 2006123850 A | 23-11-2006 | CN 101223217 A<br>EP 1882005 A1<br>JP 2008540795 T<br>KR 20060118668 A<br>US 2007232709 A1 | 16-07-2008<br>30-01-2008<br>20-11-2008<br>24-11-2006<br>04-10-2007 |
| WO 2006123849 A | 23-11-2006 | CN 101223216 A<br>EP 1883672 A1<br>JP 2008540794 T<br>KR 20060118135 A<br>US 2007052130 A1<br>US 2007218271 A1 | 16-07-2008<br>06-02-2008<br>20-11-2008<br>23-11-2006<br>08-03-2007<br>20-09-2007 |
| US 2005277702 A1 | 15-12-2005 | EP 1765920 A1<br>JP 2008501847 T<br>WO 2005121228 A1<br>US 2008139681 A1 | 28-03-2007<br>24-01-2008<br>22-12-2005<br>12-06-2008 |
| WO 2006107125 A | 12-10-2006 | CN 101184796 A<br>EP 1907458 A1<br>KR 20060106102 A<br>US 2006228540 A1<br>US 2007116944 A1 | 21-05-2008<br>09-04-2008<br>12-10-2006<br>12-10-2006<br>24-05-2007 |
| EP 1614710 A | 11-01-2006 | WO 2004085525 A1<br>KR 20050121211 A<br>TW 266779 B<br>US 2006177643 A1 | 07-10-2004<br>26-12-2005<br>21-11-2006<br>10-08-2006 |
| WO 9965093 A | 16-12-1999 | AU 4174099 A<br>CN 1304556 A<br>DE 69905719 D1<br>DE 69905719 T2<br>DK 1092243 T3<br>EP 1092243 A1<br>JP 2002518524 T<br>US 2001038947 A1 | 30-12-1999<br>18-07-2001<br>10-04-2003<br>05-02-2004<br>30-06-2003<br>18-04-2001<br>25-06-2002<br>08-11-2001 |
| WO 9817714 A | 30-04-1998 | AU 717212 B2<br>AU 4756297 A | 23-03-2000<br>15-05-1998 |

**ANNEX TO THE EUROPEAN SEARCH REPORT
ON EUROPEAN PATENT APPLICATION NO.**

EP 08 01 6880

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2009

| Patent document cited in search report | | Publication date | Patent family member(s) | | Publication date |
|---|---|---|---|---|---|
| WO 9817714 | A | | CN | 1242785 A | 26-01-2000 |
| | | | DE | 69734994 T2 | 31-08-2006 |
| | | | EP | 0932639 A1 | 04-08-1999 |
| | | | JP | 3399543 B2 | 21-04-2003 |
| | | | JP | 2002502446 T | 22-01-2002 |
| | | | KR | 20000049279 A | 25-07-2000 |
| | | | US | 5948557 A | 07-09-1999 |
| EP 0547237 | A | 23-06-1993 | CA | 2078324 A1 | 06-01-1993 |
| | | | CN | 1057873 C | 25-10-2000 |
| | | | DE | 69211510 D1 | 18-07-1996 |
| | | | DE | 69211510 T2 | 10-10-1996 |
| | | | WO | 9301623 A1 | 21-01-1993 |
| US 4620956 | A | 04-11-1986 | AU | 591917 B2 | 21-12-1989 |
| | | | AU | 6032286 A | 22-01-1987 |
| | | | CA | 1312431 C | 12-01-1993 |
| | | | DE | 3673908 D1 | 11-10-1990 |
| | | | EP | 0210059 A1 | 28-01-1987 |
| | | | JP | 1897244 C | 23-01-1995 |
| | | | JP | 6018915 B | 16-03-1994 |
| | | | JP | 62121737 A | 03-06-1987 |
| | | | ZA | 8605172 A | 25-03-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070117268
- US 4539256 A
- US 4726989 A
- US 5051183 A
- US 5830554 A
- US 6245272 B
- US 6566012 B
- US 4247498 A
- US 4867887 A
- US 5578400 A
- KR 20040075199
- US 6322923 B
- JP 7245122 A
- US 6287730 B

**Non-patent literature cited in the description**

- **JANG-MYUN KO et al.** *Electrochimica Acta,* 2004, vol. 50, 367-370